# EUROPEAN PATENT APPLICATION

(11) **EP 1 923 941 A2**
(43) Date of publication of application: **21.05.2008**
(21) Application number: 07115187.2
(22) Date of filing: 29.08.2007
(51) Int. Cl.: H01M 4/90

(54) **Method and apparatus for manufacturing electrode for fuel cells**

(30) Priority: 15.11.2006 KR 20060112725
(71) Applicant: Samsung Electronics Co., Ltd., Suwon-si, Gyeonggi-Do (KR)
(72) Inventor: Ji, Jun Ho No. 701, Arisvil Apt.,, Gyeonggi-do (KR)
(74) Representative: Grünecker, Kinkeldey, Stockmair & Schwanhäusser Anwaltssozietät

(57) **Abstract**

A method and apparatus for manufacturing an electrode for fuel cells that are capable of manufacturing an electrode in which micro catalyst particles are uniformly dispersed through a simple manufacturing process. The electrode manufacturing method includes disposing at least one heating unit to heat a material, evaporating the material using the at least one heating unit to create catalyst particles, and supplying and attaching the created catalyst particles to a carbon carrier. The electrode manufacturing apparatus includes a process chamber, a catalyst particle generator mounted in the process chamber, the catalyst particle generator directly heating a material to create catalyst particles, and a transfer device to transfer a carbon carrier disposed in the process chamber.

## Description

### BACKGROUND OF THE INVENTION

### 1. Field of the Invention

The present invention relates to a method and apparatus for manufacturing an electrode for fuel cells. More particularly, to a method and apparatus for manufacturing an electrode for fuel cells in which micro catalyst particles are uniformly dispersed through a simple manufacturing process.

### 2. Description of the Related Art

A fuel cell is an electric power production system that directly converts chemical reaction energy generated by a reaction between a fuel gas and an oxidizing gas into electrical energy. Based on the types of electrolytes used, fuel cells may be classified into a molten carbonate electrode membrane fuel cell, a phosphoric acid electrode membrane fuel cell, an alkaline electrode membrane fuel cell, and a polymer electrode membrane fuel cell. These fuel cells are operated fundamentally based on the same principle. However, the fuel cells include different types of fuels, operating temperatures, and catalysts.

Among them, the polymer electrode membrane fuel cell (PEMFC) is being widely used in various applications, such as nonpolluting vehicles, domestic power generation systems, mobile communication devices, medical instruments, and military equipment, because the polymer electrode membrane fuel cell has high output density and energy conversion efficiency, is operable at room temperature, and can be miniaturized.

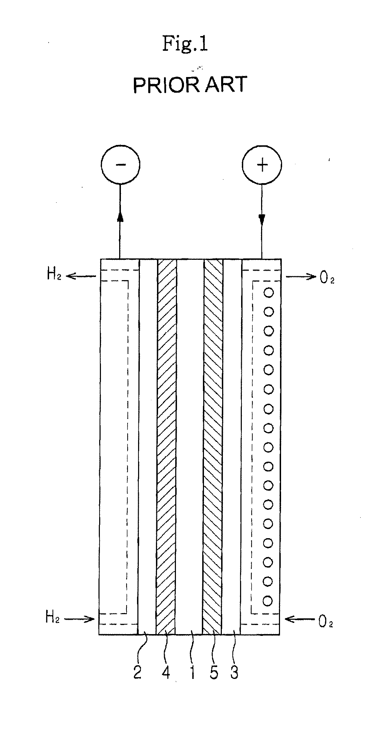

FIG. 1 is a view schematically illustrating a hydrogen ion exchange membrane fuel cell using a hydrogen gas as fuel, which is a type of polymer electrode membrane fuel cell. As shown in FIG. 1, the fuel cell is constructed in a structure in which a hydrogen ion exchange membrane 1 is disposed between an anode and a cathode (hereinafter, referred to as "gas diffusion electrodes").

The hydrogen ion exchange membrane 1 is made of solid polymer electrolyte, and the gas diffusion electrodes include support layers 2 and 3 to supply a reaction gas and catalyst layers 4 and 5 where an oxidation-reduction reaction of the reaction gas occurs. The catalyst layers 4 and 5 are mainly made of carbon powder coated with a metal catalyst, such as platinum. The carbon powder serves to broaden the reaction area of the reaction gas, and the metal catalyst facilitates the oxidation-reduction reaction of the reaction gas.

A method of manufacturing such catalyst layers may be classified as a precipitation method or a colloid method. U.S. Patent No. 4,186,110 discloses a method of basifying a slurry including a carbon support and water, injecting an aqueous chloroplatinic acid solution, and adding a reducing agent, such as formaldehyde, to reduce platinum into a liquid phase. Japanese Patent Application Publication No. 2002-42825 discloses a method of adding hydrogen to an aqueous chloroplatinic acid and polyacrylic acid solution to form colloidal platinum, supporting the colloidal platinum by a carbon support, and removing polyacrylate in a nitrogen atmosphere.

However, the method disclosed in U.S. Patent No. 4,186,110 has a disadvantage in that the dispersion of the platinum is not uniform and the size of particles is large, although it has an advantage in that the manufacturing process is relatively simple. The method disclosed in Japanese Patent Application Publication No. 2002-42825 has an advantage in that micro platinum particles are obtained by the addition of carbonic acid, such as polyacrylic acid. However, it has a disadvantage in that the manufacturing process is complicated due to an additional procedure for removing the injected carbonic acid.

Furthermore, the conventional methods mentioned above manufacture metal catalyst using a mixture containing platinum, and therefore, the methods have a limit in obtaining pure metal catalyst. In addition, the size of the catalyst particles is not easily controllable by the methods.

### SUMMARY OF THE INVENTION

Accordingly, it is an aspect of the present invention to provide a method and apparatus for manufacturing an electrode for fuel cells in which micro catalyst particles are uniformly dispersed through a simple manufacturing process.

It is another aspect of the present invention to provide a method and apparatus for manufacturing an electrode for fuel cells having pure catalyst particles.

It is another aspect of the present invention to provide a method and apparatus for manufacturing an electrode for fuel cells and easily controlling the size of catalyst particles.

Additional aspects and/or advantages of the invention will be set forth in part in the description which follows and, in part, will be apparent from the description, or may be learned by practice of the invention.

The foregoing and/or other aspects of the present invention provides a method of manufacturing an electrode for fuel cells having a catalyst support in which a metal catalyst is supported by a carrier, the method including disposing at least one heating unit to heat a material, evaporating the material using the at least one heating unit to create catalyst particles, and supplying and attaching the created catalyst particles to a carbon carrier.

According to an aspect of the present invention, disposing at least one heating unit to heat a material includes arranging a plurality of heating units in horizontal and vertical directions, and evaporating the material using the at least one heating unit to create catalyst particles includes directly heating a surface of the material.

According to an aspect of the present invention, the heating unit includes a heating body on which the material is located in contact with the heating body and a heating element buried in the heating body to generate heat.

According to an aspect of the present invention, the carbon carrier is carbon cloth or carbon paper, and the method further includes transferring the carbon cloth or the carbon paper.

According to an aspect of the present invention, the method further includes moving the catalyst particles created when evaporating the material using the at least one heating unit to create catalyst particles to the carbon carrier, using a flow generation source to generate a flow of gas.

According to an aspect of the present invention, supplying and attaching the created catalyst particles to a carbon carrier includes cooling the carbon carrier.

According to an aspect of the present invention, the material is a lump of platinum, and a temperature of the heating body in contact with the material is controlled to be between approximately 1000°C and 1700°C.

It is another aspect of the present invention to provide an apparatus for manufacturing an electrode for fuel cells having a catalyst support in which a metal catalyst is supported by a carrier, the apparatus including a process chamber having a space to perform a process therein, a catalyst particle generator mounted in the process chamber, the catalyst particle generator directly heating a material to create catalyst particles, and a transfer device to transfer a carbon carrier disposed in the process chamber.

According to an aspect of the present invention, the catalyst particle generator includes a plurality of heating units, each of the heating units including a heating body on which the material is located in contact with the heating body and a heating element buried in the heating body to generate heat.

According to an aspect of the present invention, the apparatus further includes a flow generation source to move the catalyst particles created by the catalyst particle generator to the carbon carrier.

According to an aspect of the present invention, the apparatus further includes a supporting member to support the carbon carrier and a cooling unit to cool the supporting member.

According to an aspect of the present invention, the transfer device includes a supply reel on which carbon carrier to be supplied to the process chamber is wound and a winding reel on which the carbon carrier coated with the catalyst particles in the process chamber is wound.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a view schematically illustrating a conventional hydrogen ion exchange membrane fuel cell;
FIG. 2 is a view illustrating a method of manufacturing an electrode for fuel cells according to an embodiment of the present invention;
FIG. 3 is a view of FIG. 2 when viewed in an A direction;
FIG. 4 is a view of FIG. 2 when viewed in a B direction;
FIG. 5 is a view illustrating a method of manufacturing an electrode for fuel cells according to another embodiment of the present invention; and
FIG. 6 is a view illustrating an apparatus for manufacturing an electrode for fuel cells according to an embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

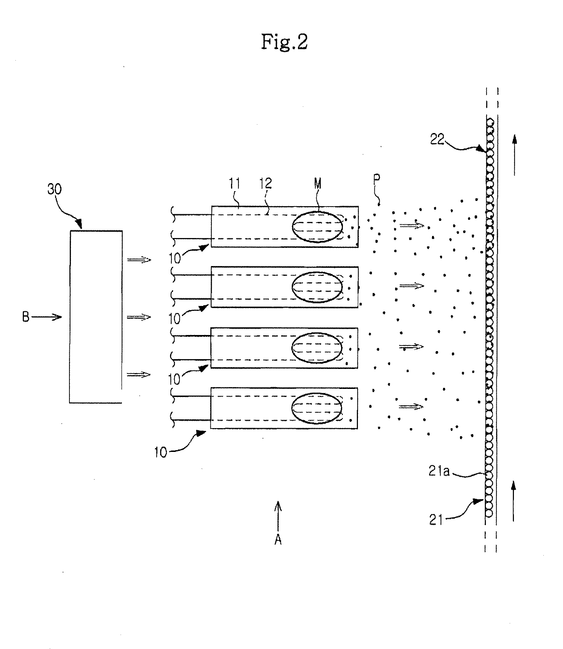

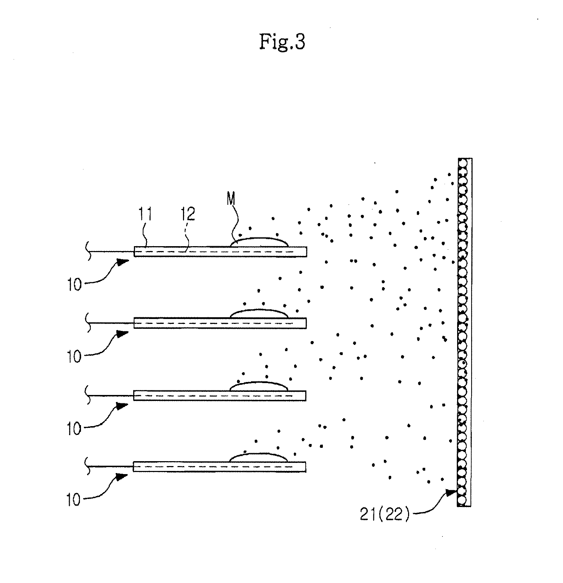

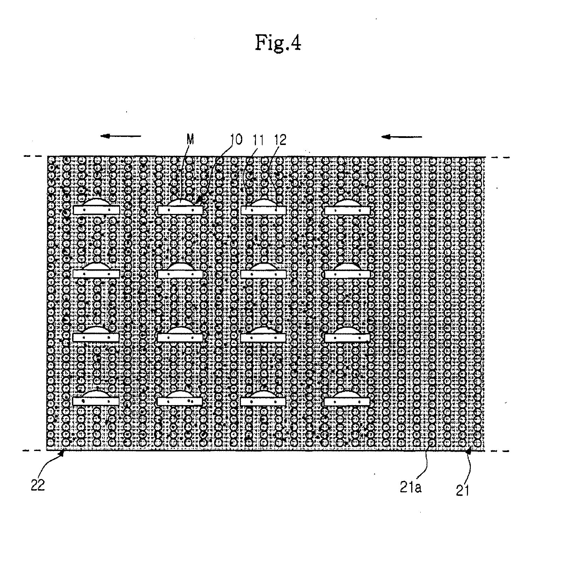

FIG. 2 is a view illustrating a method of manufacturing an electrode for fuel cells according to an embodiment of the present invention, FIG. 3 is a view of FIG. 2 when viewed in an A direction, and FIG. 4 is a view of FIG. 2 when viewed in a B direction. A flow generation source is omitted from FIGS. 3 and 4.

As shown in FIGS. 2-4, at least one heating unit 10 that heats and evaporates a material M is disposed to create micro catalyst particles P, and the created catalyst particles P is supplied to a carbon carrier 21 such that the catalyst particles P are attached to the carbon carrier 21, whereby an electrode for fuel cells is manufactured. A lump of platinum Pt may be used as the material to create the catalyst particles, and carbon cloth or carbon paper may be used as the carbon carrier 21 that supports the catalyst particles. Hereinafter, the description will be given with carbon paper being used as the carbon carrier.

FIGS. 2-4 illustrate a structure in which a plurality of heating units 10 are arranged in horizontal and vertical directions. When the heating units 10 are simultaneously operated to create the catalyst particles P, the carbon paper 21 having a large area can be coated in a short time. Consequently, the illustrated structure is suitable for mass production. According to circumstances, however, it is also possible to dispose only one heating unit 10.

The heating units 10 directly heat the material M in contact with the material M. Consequently, it is possible to heat the material M to a temperature at which the material M is evaporated in a short time, thereby reducing power consumption. When the platinum is used as the material M, it is preferable to control a temperature at which the heating unit 10 directly heat the material M to be between approximately 1000°C and 1700°C. When the temperature is lower than 1000°C, the catalyst particles are not created well at the surface of the lump of platinum. When the temperature is higher than 1700°C, the catalyst particles are excessively created, and the size of the catalyst particles is increased due to the collision between the created particles.

Each heating unit 10 comprises a plate-shaped heating body 11 on which the material M is located and a heating element 12 buried in the heating body 11 to generate heat when the heating element 12 is energized. FIG. 4 illustrates an example in which an electrical heating wire made of a tungsten wire is used as the heating element. The electrical heating wire 12 is bent in zigzag formation at a position adjacent to the material M. As a result, the electrical heating wire 12 is concentrated at the position adjacent to the material M, whereby the material M is evaporated in a short time. Opposite ends of the electrical heating wire 12 extend to the outside and are connected to an external power source (not shown) such that the electrical heating wire 12 is energized.

When the electrical heating wire 12 is energized, and therefore, heat is generated from the electrical heating wire 12, the material M located at the heating body 11 is directly heated and evaporated. The evaporated material is instantaneously cooled by ambient air having low temperature, whereby catalyst particles P having a micro size are created.

The created catalyst particles P are moved slowly toward the carbon paper 21 due to the flow of gas generated by a flow generation source 30. According to an embodiment of the present invention, a blower comprising a blowing fan and a fan motor is used as the flow generation source 30. Alternatively, according to an embodiment of the present invention, an air pump or a gas tank filled with pressurized gas is used as the flow generation source 30.

As shown in FIGS. 2 and 4, the carbon paper 21 is moved at a fixed speed in the direction intersecting the flow direction of the gas caused by the flow generation source 30. Consequently, it is possible to continuously coat the carbon paper with the catalyst particles without replacing the carbon paper on which the catalyst coating process has been completed with new carbon paper, whereby the productivity is improved.

When the catalyst particles P reach the carbon paper 21 moving in one direction, the catalyst particles P are attached to carbon particles 21 a constituting the carbon paper 21, whereby a catalyst support 22 in which the catalyst is supported by the carbon paper 21 is completed. The completed catalyst support 22 is cut into an appropriate size and is used as a catalyst layer of an electrode for fuel cells when the electrode for fuel cells is manufactured.

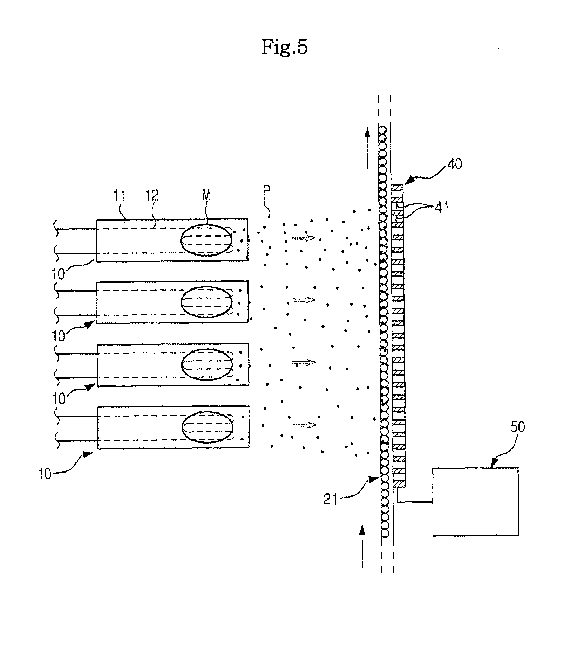

FIG. 5 is a view illustrating a method of manufacturing an electrode for fuel cells according to another embodiment of the present invention. Hereinafter, only features of this embodiment will be described.

As shown in FIG. 5, the carbon paper 21 is cooled by a supporting member 40 that supports the carbon paper 21 in contact with one surface thereof. To the supporting member 40 is connected a cooling unit 50 to cool the supporting member 40 to a temperature lower than the room temperature. According to an embodiment of the present invention, the supporting member 40 is made of a metal material having high conductivity. Also, the supporting member 40 comprises flow holes 41 through which the flow of gas generated from the flow generation source 30 passes. The cooling unit 50 is constructed in various structures so long as the cooling unit 50 can cool the supporting member 40 without disturbing the attachment of the catalyst particles P to the carbon paper 21. For example, a Peltier element having an endothermic side connected to the supporting member may be used.

The reason to maintain the carbon paper 21 at a temperature lower than the room temperature using the cooling unit 50 is so that the catalyst particles P are more smoothly moved and attached to the carbon paper 21 through thermophoretic effect. Specifically, when the material M is heated by the heating unit 10, the temperature of ambient air is raised to approximately several hundred degrees. At this time, when the carbon paper 21 is maintained at a temperature lower than the room temperature, the catalyst particles P are moved and effectively attached to the carbon paper 21 due to the difference in temperature between the carbon paper 21 and the ambient air. In this case, the blower as shown in FIG. 2 may be omitted.

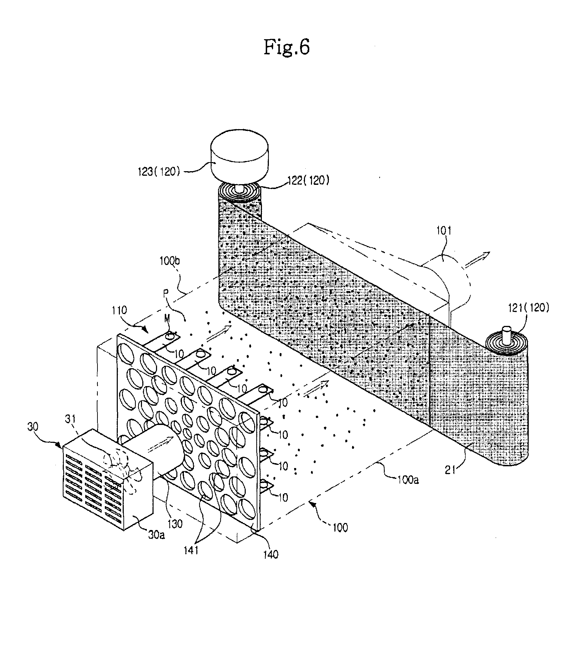

Hereinafter, an apparatus for manufacturing an electrode for fuel cells to which the above-described electrode manufacturing method is applicable will be described. FIG. 6 is a perspective view illustrating an apparatus for manufacturing an electrode for fuel cells according to an embodiment of the present invention.

As shown in FIG. 6, the electrode manufacturing apparatus comprises a process chamber 100 having a space for a process, a catalyst particle generator 110 which directly heats and thus, evaporate a material M to create catalyst particles P, a transfer device 120 to transfer a carbon carrier 21 used in the process, and a flow generation source 30 to move the catalyst particles P created by the catalyst particle generator 110 to the carbon carrier 21. The catalyst particle generator 110 includes a plurality of heating units 10 arranged in horizontal and vertical directions. The heating units 10 were previously described, and therefore, a further description thereof will not be given. Also, a blower 30a comprising a blowing fan 31 may be used as the flow generation source 30, as previously described.

An outlet side of the blower 30a communicates with one side of the process chamber 100 via a duct 130. At the other side of the process chamber 100 is formed an exhaust port 101.

Consequently, when the blower 30a is operated, an air current is introduced into the process chamber 100 through the duct 130, passes through the process chamber 100, and is then discharged through the exhaust port 101.

A porous plate 140 is disposed adjacent to the duct 130 in the process chamber 100, to uniformly disperse the flow of air introduced into the process chamber 100. The porous plate 140 comprises a plurality of dispersion holes 141 formed such that a size of the dispersion holes 141 is gradually increased toward an edge from the center facing the duct 130. The heating units 10 are disposed at the downstream side of the porous plate 140. Carbon paper 21, as the carbon carrier, is spaced a predetermined distance from the heating units 10 in the flow direction of air.

The carbon paper 21 is moved in a direction intersecting the flow direction of air by the transfer device 120. The transfer device 120 comprises a supply reel 121 on which carbon paper to be supplied to the process chamber 100 is wound, a winding reel 122 on which the carbon paper coated with catalyst particles in the process chamber 100 is wound, and a drive motor 123 to rotate the winding reel 122. The supply reel 121 is disposed outside one side 100a of the process chamber 100, and the winding reel 122 is disposed outside the other side 100b of the process chamber 100. The carbon paper wound on the supply reel 121 is supplied into the process chamber 100 through the side 100a of the process chamber 100. The carbon paper coated with catalyst particles is discharged out of the process chamber 100 through the side 100b of the process chamber 100, and is then wound on the winding reel 122.

When the blower 30a, the heating units 10 and the transfer device 120 are energized, the flow of air generated by the blower 30a is supplied into the process chamber 100 through the duct 130 and the porous plate 140. Microcatalyst particles are created by the heating units 10. The created catalyst particles are moved and attached to the carbon paper 21 along the flow of air. At this time, the carbon paper 21 is transferred in at a fixed speed in the direction intersecting the flow direction of air, and therefore, the catalyst layer coating process is continuously performed.

In this embodiment, the supporting member and the cooling unit as shown in FIG. 5 are omitted. However, the supporting member and the cooling unit may be applied to this embodiment such that the catalyst particles can be more effectively moved and attached to the carbon paper through thermophoretic effect.

Various Embodiments of the present invention have the effect of manufacturing an electrode for fuel cells in which catalyst particles are uniformly dispersed through a simple process and apparatus.

Also, embodiments of the present invention have the effect of creating catalyst particles using a physical method instead of a chemical method, which is relatively difficult to control, thereby easily controlling the size of the catalyst particles. Specifically, the size of the catalyst particles is controlled only by controlling the temperature at which a material is heated.

Also, embodiments of the present invention have the effect of directly evaporating a lump of metal to form pure catalyst particles and thus a catalyst layer, thereby improving the reaction efficiency of the electrode.

Furthermore, embodiments of the present invention have the effect of performing a continuous process, whereby the present invention is suitable for mass production.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of manufacturing an electrode for fuel cells having a catalyst support in which a metal catalyst is supported by a carrier, the method comprising:
disposing at least one heating unit to heat a material;
evaporating the material using the at least one heating unit to create catalyst particles; and
supplying and attaching the created catalyst particles to a carbon carrier.

2. The method according to claim 1, wherein disposing at least one heating unit to heat a material comprises arranging a plurality of heating units in horizontal and vertical directions.

3. The method according to claim 2, further comprising: simultaneously operating the heating units to create the catalyst particles, to thereby coat the carbon carrier.

4. The method according to claim 1, wherein evaporating the material using the at least one heating unit to create catalyst particles comprises directly heating a surface of the material.

5. The method according to claim 4, wherein the heating unit comprises a heating body on which the material is located in contact with the heating body and a heating element buried in the heating body to generate heat.

6. The method according to claim 1, wherein the carbon carrier comprises a carbon cloth or carbon paper, and the method further comprises:
transferring the carbon cloth or the carbon paper.

7. The method according to claim 1, further comprising:
moving the catalyst particles created when evaporating the material using the at least one heating unit to create catalyst particles to the carbon carrier, using a flow generation source to generate the flow of gas.

8. The method according to claim 1, wherein supplying and attaching the created catalyst particles to a carbon carrier comprises cooling the carbon carrier.

9. The method according to claim 5, wherein the material comprises a lump of platinum.

10. The method according to claim 9, wherein a temperature of the heating body in contact with the material is controlled to be between approximately 1000°C and 1700°C.

11. An apparatus for manufacturing an electrode for fuel cells having a catalyst support in which a metal catalyst is supported by a carrier, comprising:
a process chamber;
a catalyst particle generator mounted in the process chamber, the catalyst particle generator directly heating a material to create catalyst particles; and
a transfer device to transfer a carbon carrier disposed in the process chamber.

12. The apparatus according to claim 11, wherein the catalyst particle generator comprises a plurality of heating units, each of the heating units comprises a heating body on which the material is located in contact with the heating body and a heating element buried in the heating body to generate heat.

13. The apparatus according to claim 12, wherein the heating body of each heating unit is plate-shaped, and the heating element is a heating wire bent in a zigzag formation at a position adjacent to the material.

14. The apparatus according to claim 11, further comprising:
a flow generation source to move the catalyst particles created by the catalyst particle generator to the carbon carrier.

15. The apparatus according to claim 11, further comprising:
a supporting member to support the carbon carrier; and
a cooling unit to cool the supporting member.

16. The apparatus according to claim 11, wherein the transfer device comprises a supply reel on which carbon carrier to be supplied to the process chamber is wound, and a winding reel on which the carbon carrier coated with the catalyst particles in the process chamber is wound.

17. The apparatus according to claim 14, wherein the flow generation source comprises a blower including a blowing fan and a fan motor.

18. The apparatus according to claim 14, wherein the flow generation source is an air pump or a gas tank filled with pressured gas.

19. The apparatus according to claim 17, wherein the blower communicates with one side of the process chamber via a duct, and an exhaust port is formed at another side of the process chamber such that when the blower is operated, an air current is introduced into the process chamber through the duct, and passes through the process chamber and is then discharged through the exhaust port.

20. The apparatus according to claim 19, wherein the process chamber further comprises a porous plate disposed therein, to uniformly disperse the flow of air introduced into the process chamber, wherein the porous plate comprises a plurality of dispersion holes.

21. The apparatus according to claim 20, wherein the dispersion holes are formed such that a size of the dispersion holes is gradually increased toward an edge from a center facing the duct, and the heating units are disposed at a downstream side of the porous plate.

22. The apparatus according to claim 21, wherein the carbon carrier is spaced a predetermined distance from the heating units in the flow direction of air, and the carbon carrier is moved in a direction intersecting the flow direction of air by the transfer device.

23. The apparatus according to claim 22, wherein when the blower, the heating units and the transfer device are energized, the flow of air generated by the blower is supplied into the process chamber through the duct and the porous plate, and microcatalyst particles are created by the heating units and the created catalyst particles are moved and attached to the carbon carrier along the flow of air.

24. The apparatus according to claim 14, wherein the carbon carrier is transferred in at a fixed speed in the direction intersecting the flow direction of air generated by the flow generation source such that a catalyst layer coating process is continuously performed.
